(19) Europäisches Patentamt

European Patent Office

Office européen des brevets

(11) **EP 1 089 056 A1**

(12) **EUROPÄISCHE PATENTANMELDUNG**

(43) Veröffentlichungstag:
**04.04.2001 Patentblatt 2001/14**

(51) Int. Cl.[7]: **G01D 5/16**, G01P 13/04

(21) Anmeldenummer: **00203372.8**

(22) Anmeldetag: **26.09.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **01.10.1999 DE 19947179**

(71) Anmelder:
• **Philips Corporate Intellectual Property GmbH**
**52064 Aachen (DE)**
Benannte Vertragsstaaten:
**DE**

• **Koninklijke Philips Electronics N.V.**
**5621 BA  Eindhoven (NL)**
Benannte Vertragsstaaten:
**FR GB**

(72) Erfinder: **Pusch, Stefan**
**52064 Aachen (DE)**

(74) Vertreter:
**Volmer, Georg, Dipl.-Ing.**
**Philips Corporate Intellectual Property GmbH,**
**Habsburgerallee 11**
**52064 Aachen (DE)**

(54) **Anordnung mit einem Bewegungsgeberelement**

(57)     Die Erfindung betrifft eine Anordnung zum Bestimmen der Bewegungsrichtung eines die Ausbildung eines Magnetfeldes periodisch, vorzugsweise wenigstens sinusförmig, mit seinem Drehwinkel beeinflussenden Bewegungsgeberelements mit einer zwei magnetfeldempfindliche Halbbrücken umfassenden Wheatstonebrücke, wobei die Halbbrücken bezüglich des Bewegungsgeberelements an Orten mit in jeder Lage des Bewegungsgeberelements unterschiedlicher Ausbildung des Magnetfeldes positioniert sind und je ein von der Lage des Bewegungsgeberelements abhängiges Halbbrückensignal abgeben, mit je einer Verknüpfungsschaltung zum Bestimmen eines Summensignals und eines Differenzsignals aus den Halbbrückensignalen, wobei das Summen- und das Differenzsignal von einem durch den Unterschied der Positionierungen der Halbbrücken bestimmten Phasenwinkel abhängig sind, mit einer Auswerteschaltung zum Detektieren einer ersten Signalprobe des Summensignals zum Zeitpunkt eines fallenden Nulldurchgangs des Differenzsignals zum Detektieren einer zweiten Signalprobe des Summensignals zum Zeitpunkt eines steigenden Nulldurchgangs des Differenzsignals während einer Bewegung des Bewegungsgeberelements sowie zum Ermitteln eines die Bewegungsrichtung anzeigenden Signals aus dem Vergleich der ersten und der zweiten Signalprobe.

Durch diese Anordnung wird eine einfache Bestimmung der Bewegungsrichtung des Bewegungsgeberelements erreicht.

FIG. 1

Printed by Xerox (UK) Business Services
2.16.7 (HRS)/3.6

**Beschreibung**

Die Erfindung bezieht sich auf eine Anordnung mit einem Bewegungsgeberelement.

Anordnungen mit Bewegungsgeberelementen werden für die Drehzahlerfassung der Räder von Landfahrzeugen, vorzugsweise Kraftfahrzeugen, insbesondere Personenkraftwagen oder Motorräder, für dort eingesetzte Antiblockiersysteme benutzt.

Aus der EP 0 913 668 A1 ist ein Verfahren zum Ermitteln des Phasenwinkels bei Positionsgebern mit sinusförmigen Ausgangssignalen bekannt. Das Verfahren verwendet einen Sensor, der ein sinusförmiges Signal und ein kosinusförmiges Signal erzeugt. Es werden Linearkombinationen aus dem sinusförmigen und dem kosinusförmigen Signal gebildet. Durch Untersuchung der Vorzeichen der Linearkombinationen wird in einem einschrittigen, binären Code der Quadrant bestimmt. In Abhängigkeit von dem Quadranten wird eine Division zwischen einer der Linearkombinationen und dem kosinusförmigen bzw. dem sinusförmigen Signal durchgeführt. Das Ergebnis der Division dient als Adresse zum Abfragen einer gespeicherten Winkeltabelle. Als erstes werden das sinusförmige bzw. das kosinusförmige Signal in digitale Signale umgewandelt und alle weiteren Rechenoperationen erfolgen rein digital. Bei der Ganzzahldivision ist der Dividend eine der Linearkombinationen und der Divisor in Abhängigkeit vom ermittelten Quadranten entweder das sinus- oder das kosinusförmige Signal. Der Betrag des Divisors liegt dabei stets im Bereich oberhalb des 0,7-fachen des Maximalwertes des jeweiligen sinus- oder kosinusförmigen Signals.

Das beschriebene Verfahren ist recht aufwendig zu realisieren. Außerdem liefert es keine unmittelbare Information über die Bewegungsrichtung der mit dem Positionsgeber abgetasteten Bewegung.

Die Erfindung hat die Aufgabe, eine einfache Anordnung zum Bestimmen der Bewegungsrichtung eines Bewegungsgeberelements zu schaffen.

Erfindungsgemäß wird diese Aufgabe gelöst durch eine Anordnung zum Bestimmen der Bewegungsrichtung eines die Ausbildung eines Magnetfeldes periodisch, vorzugsweise wenigstens sinusförmig, mit seinem Drehwinkel beeinflussenden Bewegungsgeberelements mit einer zwei magnetfeldempfindliche Halbbrücken umfassenden Wheatstonebrücke, wobei die Halbbrücken bezüglich des Bewegungsgeberelements an Orten mit in jeder Lage des Bewegungsgeberelements unterschiedlicher Ausbildung des Magnetfeldes positioniert sind und je ein von der Lage des Bewegungsgeberelements abhängiges Halbbrückensignal abgeben, mit je einer Verknüpfungsschaltung zum Bestimmen eines Summensignals und eines Differenzsignals aus den Halbbrückensignalen, wobei das Summen- und das Differenzsignal von einem durch den Unterschied der Positionierungen der Halbbrücken bestimmten Phasenwinkel abhängig sind, mit einer Auswerteschaltung zum Detektieren einer ersten Signalprobe des Summensignals zum Zeitpunkt eines fallenden Nulldurchgangs des Differenzsignals zum Detektieren einer zweiten Signalprobe des Summensignals zum Zeitpunkt eines steigenden Nulldurchgangs des Differenzsignals während einer Bewegung des Bewegungsgeberelements sowie zum Ermitteln eines die Bewegungsrichtung anzeigenden Signals aus dem Vergleich der ersten und der zweiten Signalprobe.

Die erfindungsgemäße Anordnung ermittelt lediglich das Vorzeichen, jedoch nicht den Betrag der Phasendifferenz zweier aus dem Bewegungsgeberelement gewonnenen Signale. Mit dieser Vorzeicheninformation kann sehr einfach und schnell eine Aussage über die Bewegungsrichtung getroffen werden.

Die Erfindung ist vorteilhaft einsetzbar in einem Antiblockiersystem für ein Fahrzeug mit einer wenigstens ein Bewegungsgeberelement umfassenden Einrichtung zur Bewegungserfassung wenigstens eines Rades des Fahrzeugs. Sie ist funktionssicher und robust aufbaubar und damit vorteilhaft für die starken Beanspruchungen in der Fahrzeugtechnik geeignet.

Ein Ausführungsbeispiel der Erfindung ist in der Zeichnung dargestellt und wird im nachfolgenden näher beschrieben. Es zeigen:

　　　Fig. 1 eine schematische Darstellung eines Ausführungsbeispiels der erfindungsgemäßen Anordnung,
　　　Fig. 2 und 3 Signalverläufe in der erfindungsgemäßen Anordnung für zwei unterschiedliche Betriebsfälle.

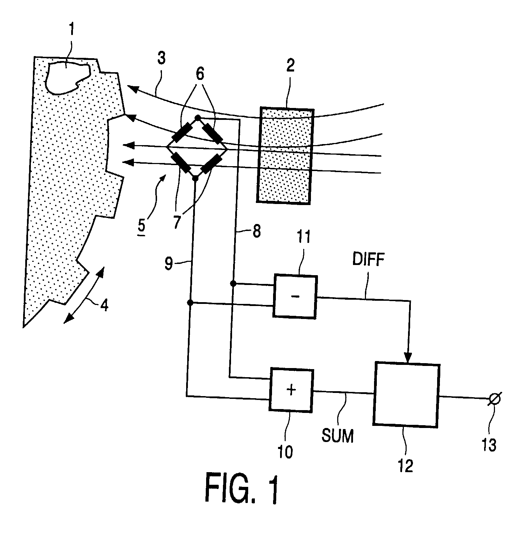

Die Anordnung nach Fig. 1 umfasst ein zahnradförmig aus magnetisch leitfähigem Material ausgebildetes Bewegungsgeberelements, beispielsweise an einem Fahrzeugrad. Diesem in radialer Richtung gegenüber angeordnet befindet sich ein Magnet 2, vorzugsweise als Permanentmagnet ausgebildet, der ein durch beispielhaft dargestellte Magnetfeldlinien angedeutetes Magnetfeld 3 aufbaut. Durch eine Bewegung des Bewegungsgeberelements 1 in Richtung der Pfeile 4 wird das Magnetfeld 3 periodisch, vorzugsweise sinusförmig — bei entsprechender Ausgestaltung des Bewegungsgeberelements 1 — beeinflusst. Diese periodischen Änderungen des Magnetfelds 3 werden durch eine Wheatstonebrücke 5 detektiert. Diese Wheatstonebrücke 5 umfasst eine erste Halbbrücke 6 und eine zweite Halbbrücke 7 aus je zwei magnetfeldempfindlichen Bauelementen. Als solche Bauelemente können an sich bekannte Elemente verwendet werden, die den magnetoresistiven Effekt, den Hall-Effekt oder auch den in einer Feldplatte auftretenden Effekt auswerten. Die Wheatstonebrücke 5 ist in Fig. 1 nur schematisch dargestellt, die Gleichstromspeisung und alle übrigen konstruktiven Merkmale sind der Übersichtlichkeit wegen weggelassen worden. Die beiden Halbbrücken 6, 7 sind geometrisch getrennt voneinander angeordnet, d.h. sie befinden sich an Orten mit in jeder Lage des Bewegungsgeberelements 1 unterschiedlicher Ausbildung des Magnetfeldes 3.

Von den Halbbrücken 6, 7 werden an Anschlüssen 8 bzw. 9 Halbbrückensignale abgegeben, die von der Lage des Bewegungsgeberelements 1 abhängen. Wie bereits angedeutet, wird bei entsprechender Gestalt des Bewegungsgeberelements 1 und einer Bewegung in eine der Bewegungsrichtungen 4 eine periodische, sinusförmige Verbiegung der Magnetfeldlinien des Magnetfeldes 3 entstehen. Da die Halbbrücken 6, 7 in diesem Wechselfeld plaziert sind, führt das sinusförmige Magnetfeld 3 zu ebenfalls sinusförmigen Halbbrückensignalen an den Anschlüssen 8 und 9. Diese Halbbrückensignale werden an den Anschlüssen 8, 9 als elektrische Spannungen abgegeben. Durch die örtliche Trennung der Halbbrücken 6, 7 wird die eine der Halbbrücken 6, 7 einen ankommenden Zahn des Bewegungsgeberelements 1 früher als die andere Halbbrücke 7 bzw. 6 detektieren. Bedingt durch die mechanischen Abmessungen des Bewegungsgeberelements und der Wheatstonebrücke 5 stellt sich ein Phasenversarz zwischen den Halbbrückensignalen an den Anschlüssen 8, 9 ein. Das Vorzeichen dieses Phasenversatzes hängt von der Bewegungsrichtung des Bewegungsgeberelements 1 ab.

Für die folgende Betrachtung wird die Spannung, d.h. das Halbbrückensignal, am Anschluss 8 der ersten Halbbrücke 6 mit V2 bezeichnet. Für das Halbbrückensignal am Anschluss 9 der zweiten Halbbrücke 7 wird die Bezeichnung V1 eingeführt. Der Phasenwinkel zwischen beiden Halbbrückensignalen wird mit phi bezeichnet. Für das vorliegende Ausführungsbeispiel einer Drehbewegung ist mit w die Kreisfrequenz der Bewegung des Bewegungsgeberelements 1 und mit t die Zeit bezeichnet. Das Halbbrückensignal V1 ist dann proportional zu $\sin(wt+phi/2)$, wohingegen das Halbbrückensignal V2 am Anschluss 8 der ersten Halbbrücke 6 proportional zu $\sin(wt-phi/2)$ ist.

Zur Auswertung der Halbbrückensignale V1 und V2 werden diese über die Anschlüsse 8, 9 zunächst einer ersten Verknüpfungsschaltung 10 zugeführt, die an ihrem Ausgang ein Summensignal SUM abgibt, welches sich aus der Summe V1+V2 der Halbbrückensignale bestimmt. Eine zweite Verknüpfungsschaltung 11, der ebenfalls die Halbbrückensignale über die Anschlüsse 8, 9 zugeführt werden, bestimmt aus der Differenz V1-V2 ein Differenzsignal DIFF und gibt dieses an ihrem Ausgang ab. Das Summensignal SUM und das Differenzsignal DIFF sind somit von dem Phasenwinkel phi abhängig, der durch den Unterschied der Positionierungen der Halbbrücken 6, 7 bestimmt wird.

Die Anordnung nach Fig. 1 umfasst weiterhin eine Auswerteschaltung 12 zum Detektieren einer ersten Signalprobe des Summensignals SUM zum Zeitpunkt eines fallenden Nulldurchgangs des Differenzsignals DIFF. Eine zweite Signalprobe des Summensignals SUM wird zum Zeitpunkt eines steigenden Nulldurchgangs des Differenzsignals DIFF während der Bewegung des Bewegungsgeberelements 1 detektiert. Dazu kann das Differenzsignal DIFF bevorzugt über mit fallenden bzw. steigenden Nulldurchgängen triggerbare Kippschaltungen geführt werden, die bei den entsprechenden Nulldurchgängen abwechselnd getriggerte Impulse abgeben, über die Abtast- und Halteschaltungen gesteuert werden, die die entsprechenden Signalproben des Summensignals SUM abtasten und speichern. Über eine Komparationsschaltung werden die in den Abtast- und Halteschaltungen gespeicherten Signalproben des Summensignals SUM verglichen und wird daraus ein die Bewegungsrichtung des Bewegungsgeberelements 1 anzeigenden Signal ermittelt. Dieses wird an einem Ausgang 13 der Auswerteschaltung 12 abgegeben.

Gemäß dem vorstehend beschriebenen Betriebsablauf ist das so gebildete Differenzsignal DIFF proportional zu $\cos(phi/2)$, wohingegen das Summensignal SUM proportional ist zu $\sin(phi/2)$. Somit ändert das Summensignal SUM sein Vorzeichen, wenn sich das Vorzeichen des Phasenwinkels phi ändert. Dagegen bleibt bei einem Vorzeichenwechsel des Phasenwinkels phi das Vorzeichen des Differenzsignals DIFF unverändert. Außerdem lässt sich zeigen, dass das Summensignal SUM und das Differenzsignal DIFF bezüglich der Kreisfrequenz w der Bewegung des Bewegungsgeberelements 1 gegeneinander um 90° phasenverschoben sind. Bei einem Nulldurchgang des Differenzsignals DIFF tritt somit ein Extremwert des Summensignals SUM auf. Dies erleichtert wesentlich die beschriebene Auswertung der beiden Signale.

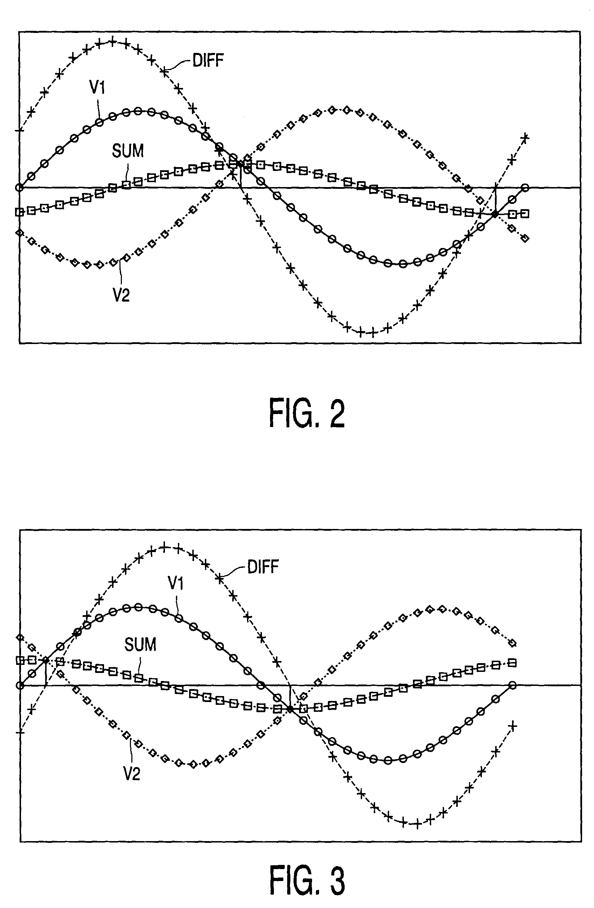

Im ersten Betriebsfall gemäß Fig. 2 tritt ein Phasenwinkel phi auf, bei dem zum Zeitpunkt eines fallenden Nulldurchgangs des Differenzsignals DIFF das Summensignal SUM einen positiven Wert annimmt. Zum Zeitpunkt des steigenden Nulldurchgangs des Differenzsignals DIFF nimmt das Summensignal SUM einen negativen Wert an. Der Phasenwinkel phi beträgt hier 40°.

Im zweiten, beispielhaft dargestellten Betriebsfall gemäß Fig. 3 ist ein Phasenwinkel von -40° vorausgesetzt worden. Zum Zeitpunkt eines fallenden Nulldurchgangs des Differenzsignals DIFF nimmt dann das Summensignal SUM einen negativen Wert an. Zum Zeitpunkt eines steigenden Nulldurchgangs des Differenzsignals DIFF nimmt das Summensignal SUM einen positiven Wert an.

Durch Vergleich bzw. Differenzbildung der so gewonnenen Signalproben zu den Zeitpunkten der Nulldurchgänge des Differenzsignals DIFF wird nun in der Auswerteschaltung 12 ermittelt, ob das Vorzeichen des Phasenwinkels phi positiv oder negativ ist, d.h. welche Bewegungsrichtung des Bewegungsgeberelements 1 vorliegt. Dies wird als die Bewegungsrichtung anzeigendes Signal am Ausgang 13 abgegeben.

Die erfindungsgemäße Anordnung und das damit durchgeführte Signalbearbeitungsverfahren sind vorteilhaft als Zusatzfunktion bzw. Zusatzeinrichtung eines bereits bestehenden Systems mit Differenzsignal-Auswertung, beispielsweise zur Drehzahlerfassung eines Bewegungsgeberelements, zu implementieren. Der zusätzliche Aufwand eines analogen Addierers und einer Anordnung zur Entscheidung, ob ein Maximum oder ein Minimum vorliegt, ist gering. Verglichen mit absolute Werte messenden Phasendetektoren lässt sich durch die Erfindung eine effizientere Gestaltung einer Drehrichtungserkennung erreichen, insbesondere kann durch die Erfindung bei Ausgestaltung als integrierte Schaltung Kristallfläche eingespart werden.

Ein weiterer Vorteil der Erfindung besteht darin, dass die beiden Halbbrückensignale V1 und V2 nur grob von Gleichspannungskomponenten befreit werden müssen, um eine Übersteuerung der nachfolgenden Auswertung der sinusförmigen Verläufe zu vermeiden. Im Gegensatz hierzu benötigen absolut bzw. betragsmessende Phasendetektoren Eingangssignale, welche vollständig und exakt von Gleichkomponenten befreit sein müssen, um einwandfrei arbeiten zu können.

**Patentansprüche**

1. Anordnung zum Bestimmen der Bewegungsrichtung eines die Ausbildung eines Magnetfeldes periodisch, vorzugsweise wenigstens sinusförmig, mit seinem Drehwinkel beeinflussenden Bewegungsgeberelements mit einer zwei magnetfeldempfindliche Halbbrücken umfassenden Wheatstonebrücke, wobei die Halbbrücken bezüglich des Bewegungsgeberelements an Orten mit in jeder Lage des Bewegungsgeberelements unterschiedlicher Ausbildung des Magnetfeldes positioniert sind und je ein von der Lage des Bewegungsgeberelements abhängiges Halbbrückensignal abgeben, mit je einer Verknüpfungsschaltung zum Bestimmen eines Summensignals und eines Differenzsignals aus den Halbbruckensignalen, wobei das Summen- und das Differenzsignal von einem durch den Unterschied der Positionierungen der Halbbrücken bestimmten Phasenwinkel abhängig sind, mit einer Auswerteschaltung zum Detektieren einer ersten Signalprobe des Summensignals zum Zeitpunkt eines fallenden Nulldurchgangs des Differenzsignals zum Detektieren einer zweiten Signalprobe des Summensignals zum Zeitpunkt eines steigenden Nulldurchgangs des Differenzsignals während einer Bewegung des Bewegungsgeberelements sowie zum Ermitteln eines die Bewegungsrichtung anzeigenden Signals aus dem Vergleich der ersten und der zweiten Signalprobe.

2. Antiblockiersystem für ein Fahrzeug mit einer wenigstens ein Bewegungsgeberelement umfassenden Einrichtung zur Bewegungserfassung wenigstens eines Rades des Fahrzeugs, <u>gekenn-</u>

<u>zeichnet durch</u>
eine Anordnung zum Bestimmen der Bewegungsrichtung des Bewegungsgeberelements nach Anspruch 1.

FIG. 1

FIG. 2

FIG. 3

Europäisches
Patentamt

**EUROPÄISCHER RECHERCHENBERICHT**

Nummer der Anmeldung

EP 00 20 3372

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X<br><br>Y | US 4 629 982 A (KIESLICH WALTER G)<br>16. Dezember 1986 (1986-12-16)<br>* das ganze Dokument * | 1<br><br>2 | G01D5/16<br>G01P13/04 |
| Y | GB 2 197 483 A (BOSCH GMBH ROBERT)<br>18. Mai 1988 (1988-05-18)<br>* Zusammenfassung *<br>* Seite 1, Zeile 68 – Zeile 70 * | 2 | |
| | | | **RECHERCHIERTE SACHGEBIETE (Int.Cl.7)**<br><br>G01D<br>G01P |

Der vorliegende Recherchenbericht wurde für alle Patentansprüche erstellt

| Recherchenort | Abschlußdatum der Recherche | Prüfer |
|---|---|---|
| DEN HAAG | 9. Januar 2001 | Lut, K |

**ANHANG ZUM EUROPÄISCHEN RECHERCHENBERICHT
ÜBER DIE EUROPÄISCHE PATENTANMELDUNG NR.**  EP 00 20 3372

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-01-2001

| Im Recherchenbericht angeführtes Patentdokument | Datum der Veröffentlichung | Mitglied(er) der Patentfamilie | Datum der Veröffentlichung |
|---|---|---|---|
| US 4629982 A | 16-12-1986 | KEINE | |
| GB 2197483 A | 18-05-1988 | DE 3639208 A | 19-05-1988 |
| | | IT 1232953 B | 11-03-1992 |

Für nähere Einzelheiten zu diesem Anhang : siehe Amtsblatt des Europäischen Patentamts, Nr.12/82